# EUROPEAN PATENT SPECIFICATION

(11) **EP 1 592 820 B1**
(45) Date of publication and mention of the grant of the patent: **28.11.2007**
(21) Application number: 04707747.4
(22) Date of filing: 03.02.2004
(51) Int. Cl.: C22C 38/40, C22C 38/44, C22C 38/48, C22C 30/00

(54) **AUSTENITIC STAINLESS STEELS INCLUDING MOLYBDENUM**
AUSTENITISCHER ROSTFREIER STAHL MIT MOLYBDENUM
ACIERS INOXYDABLES AUSTENITIQUES CONTENANT DU MOLYBDENE

(30) Priority: 06.02.2003 US 360961
(43) Date of publication of application: 09.11.2005
(73) Proprietor: ATI Properties, Inc., Albany, OR 97321 (US)
(72) Inventor: RAKOWSKI, James, M., Pittsburgh, PA 15212 (US)
(74) Representative: Powell, Timothy John
(86) International application number: PCT/US2004/003045
(87) International publication number: WO 2004/072316

(56) References cited:
- EP-A- 0 709 479
- WO-A-02/14570
- GB-A- 2 138 446
- JP-A- 61 099 661
- US-A- 4 489 040
- US-A- 4 505 232
- US-A- 4 671 929
- US-A- 5 160 389
- US-A- 5 827 377
- J.R. DAVID, ED.: "Heat resistant materials" 1997, ASM INTERNATIONAL , OHIO, USA , XP002287341 ISBN: 0-87170-596-6 page 126, right-hand column, paragraph 1

## Description

The present invention relates articles of manufacture including oxidation and corrosion resistant austenitic stainless steels. More particularly, the present invention relates to austenitic stainless steels adapted for use in high temperature and corrosive environments, such as, for example, use in automotive exhaust system components. The austenitic stainless steels of the invention find particular application in components exposed to temperatures up to 1800°F (982°C) and to corrosive environments, such as, for example, chloride-rich waters.

### DESCRIPTION OF THE INVENTION BACKGROUND

In the manufacture of automotive exhaust system components, concurrent goals are to minimize both cost and weight, while also maintaining the integrity of the system. Typically, automobile components for these applications are fabricated from thin stainless steel stock in order to minimize the weight of the components and, therefore, the components' resistance to corrosive attack must be high to prevent failure by perforation or other means. Corrosion resistance is complicated by the fact that components used for certain automotive exhaust system applications are exposed to severely corrosive chemical environments at elevated temperatures. In particular, automotive exhaust system components and other automotive engine components are exposed to contamination from road deicing salts under conditions of elevated temperature due to the hot exhaust gases. The stainless steel and other metal components subjected to these conditions are susceptible to a complex mode of corrosive attack known as hot salt corrosion.

Typically, at higher temperatures, stainless steel components undergo oxidation on surfaces exposed to air to form a protective metal oxide layer. The oxide layer protects the underlying metal and reduces further oxidation and other forms of corrosion. However, road deicing salt deposits may attack and degrade this protective oxide layer. As the protective oxide layer is degraded, the underlying metal may be exposed and become susceptible to severe corrosion.

Thus, metal alloys selected for automotive exhaust system components are exposed to a range of demanding conditions. Durability of automotive exhaust system components is critical because extended lifetimes are demanded by consumers, by federal regulations, and also under manufacturers' warranty requirements. To further complicate alloy selection for automotive exhaust system components, a recent development in these applications is the use of metallic flexible connectors, which act as compliant joints between two fixed exhaust system components. Flexible connectors may be used to mitigate problems associated with the use of welded, slip, and other joints. A material chosen for use in a flexible connector is subjected to a high temperature corrosive environment and must be both formable and have resistance to hot salt corrosion and various other corrosion types, such as, for example, intermediate temperature oxidation, general corrosion, and chloride stress corrosion cracking.

Alloys for use in automotive exhaust system flexible connectors often experience conditions in which elevated temperature exposure occurs after the alloy has been exposed to contaminants such as road deicing salts. Halide salts can act as fluxing agents, removing the protective oxide scales which normally form on the connectors at elevated temperatures. Degradation of the connectors may be quite rapid under such conditions. Therefore, simple air oxidation testing may be inadequate to reveal true resistance to corrosive degradation in service.

The automotive industry uses several alloys for manufacturing automotive exhaust system components. These alloys range from low cost materials with moderate corrosion resistance to high cost, highly alloyed materials with much greater corrosion resistance. A relatively low cost alloy with moderate corrosion resistance is AISI Type 316Ti (UNS Designation S31635). Type 316Ti stainless steel corrodes more rapidly when exposed to elevated temperatures and, therefore, is not generally used in automotive exhaust system flexible connectors when temperatures are greater than approximately 1200°F (649°C). Type 316Ti is typically only used for automotive exhaust system components which do not develop high exhaust temperatures.

Higher cost, more highly alloyed materials are commonly used to fabricate flexible connectors for automotive exhaust systems exposed to higher temperatures. A typical alloy used in the manufacture of flexible connectors that are subjected to elevated temperature corrosive environments is the austenitic nickel-base superalloy of UNS Designation N06625, which is sold commercially as, for example, Allegheny Ludium ALTEMP^{®} 625 (hereinafter "AL 625") alloy. AL 625 is an austenitic nickel-based superalloy possessing excellent resistance to oxidation and corrosion over a broad range of corrosive conditions and displaying excellent formability and strength. Alloys of UNS Designation N06625 generally comprise, by weight, approximately 26-25% chromium, approximately 8-12% molybdenum, approximately 3.5% niobium, and 4% iron. Although alloys of this type are excellent choices for automotive exhaust system flexible connectors, they are quite expensive compared to Type 31ETi alloys.

Automotive exhaust system component manufacturers may use other alloys for constructing exhaust system flexible connectors. However, none of those alloys provide high corrosion resistance, especially when exposed to elevated temperatures and corrosive contaminants such as road deicing salts.

Thus, there exists a need for a corrosion resistant material for use in high temperature corrosive environments that is not as highly alloyed as, for example, alloys of UNS Designation N06625 and which, therefore, is less costly to produce than such superalloys. More particularly, there exist a need for an iron-base alloy which may be formed into, for example, light-weight flexible connectors and other components for automotive exhaust systems and which will resist corrosion from corrosive substances such as salt deposits and other road deicing products at elevated temperatures.

WO 02/14570 discloses an oxidation and corrosion resistant austenitic stainless steel.

### SUMMARY OF THE INVENTION

The invention provides an article for manufacture in accordance with claim 1 of the appended claims. The present invention addresses the above described needs by providing an article for manufacture including an austenitic stainless steel as defined in claim 1.

Unless stated otherwise, all composition percentages herein are weight percentages based on total weight of the alloy.

Certain embodiments of the articles for manufacture including austenitic stainless steels according to the present invention exhibit enhanced resistance corrosion by salt at a broad temperature range up to at least 1500°F (816°C). Thus, the stainless steels of the present invention would find broad application as, for example, automotive components and, more particularly, as automotive, exhaust system components and flexible connectors, as wall as in other applications in which corrosion resistance is desired. The articles for manufacture of the present invention exhibits excellent oxidation resistance at elevated temperatures and therefore, find broad application in high temperature applications, such as heating element sheaths.

The present invention also provides methods of fabricating an article of manufacture from austenitic stainless steels in accordance with claim 17 of the appended claims.

The present invention additional provides methods of fabricating an article of manufacture wherein the method comprises forming at least a portion of the article of manufacture from an austenitic stainless steel comprising, by weight, 19 to 23% chromium, 30 to 35% nickel, 1 to 6% molybdenum, 0 to 0.03% titanium, 0.15 to 0.6% aluminum, up to 0.1% carbon, 1 to 1.5% manganese, 0 to less than 0.8% silicon, 0.24 to 0.6% niobium, iron, and incidental impurities. Non-limiting examples of articles of manufacture that may be made using such method of the present invention include an automobile, an automotive exhaust system component, an automotive exhaust system flexible connector, a heating element sheath, and a gasket.

### BRIEF DESCRIPTION OF THE FIGURES

The features and advantages of the present invention may be better understood by reference to the accompanying figures in which:
Figure 1 is a graph of weight change data comparing the results of hot salt corrosion testing of flat coupon samples of an alloy (Sample 2) and prior art alloys coated with 0.0, 0.05 and 0.10 mg/cm² salt layers and exposed for 72 hours to 1200°F (649°C);
Figure 2 is a graph of weight change data comparing the results of hot salt corrosion testing of flat coupon samples of an alloy (Sample 2) and prior art alloys coated with 0.0, 0.05 and 0.10 mg/cm² salt layers and exposed for 72 hours to 1500°F (816°C);
Figure 3 is a graph of weight change data comparing the results of hot salt corrosion testing of welded teardrop samples of an alloy (Sample 2) and prior art alloys coated with a nominal 0.10 mg/cm² salt layer and exposed to 1200°F (649°C);
Figure 4 is a graph of weight change data comparing the results of hot salt corrosion testing of welded teardrop samples of an alloy (Sample 2) and prior art alloys coated with a nominal 0.10 mg/cm² salt layer and exposed to 1500°F (816°C);
Figure 5 is a graphical illustration of a typical corroded metal sample illustrating terms results of analysis procedure of ASTM G54-Standard Practice for Simple Static Oxidation Testing;
Figure 6 is a depth of penetration graph comparing the results of measurements taken according to ASTM G54 for welded teardrop samples with a nominal 0.10 mg/cm² salt coating exposed to 1200°F (649°C) for a sample of the alloy (Sample 2) and prior art alloys;
Figure 7 is a depth of penetration graph comparing the results of measurements taken according to ASTM G54 for welded teardrop samples with a nominal 0.10 mg/cm² salt coating exposed to 1500°F (816°C) for a sample of the alloy (Sample 2) and prior art alloys; and
Figures 8-12 are micrographs of alloy specimens including varying levels of titanium and niobium, and which were prepared as described in Example 2.

### DETAILED DESCRIPTION OF EMBODIMENTS OF THE INVENTION

The present invention provides austenitic stainless steels resistant to corrosion at elevated temperatures. The corrosion resistant austenitic stainless steels of the present invention find particular application in the automotive industry and, more particularly, in automotive exhaust system components. Austenitic stainless steels are alloys including iron, chromium and nickel. Typically, austenitic stainless steels are used in applications requiring corrosion resistance and are characterized by a chromium content above 16% and nickel content above 7%.

In general, the process of corrosion is the reaction of a metal or metal alloy with their environment. The corrosion resistance of a metal or alloy in a particular environment is generally determined at least partly by its composition, among other factors. The byproducts of corrosion are generally metal oxides such as iron oxides, aluminum oxides, chromium oxide, etc. The formation of certain oxides, particularly chromium oxide, on stainless steel is beneficial and effectively prevents further degradation of the underlying metal. Corrosion may be accelerated by the presence of heat or corrosive agents.

Corrosion resistance of stainless steels used in automotive applications is complicated by exposure to contamination from road deicing salts under conditions of elevated temperature. This exposure results in a complex form of corrosion due to the interaction between the oxides which form at elevated temperatures and the contaminating salts. Elevated temperature oxidation is typified by the formation of protective oxides by reaction of the metal directly with the oxygen in the air. The road deicing salts which deposit on the automotive components may attack and degrade the protective oxide layer. As the protective layer degrades, the underlying metal is exposed to further corrosion. Halide salts, particularly chloride salts, tend to promote localized forms of attack such as pitting or grain boundary oxidation.

The present austenitic stainless steels include 1 to 6% molybdenum by weight. Molybdenum is added as an alloying agent to provide corrosion resistance, toughness, strength, and resistance to creep at elevated temperatures. The austenitic stainless steels of the present invention have a composition as defined in claim 1. The present austenitic stainless steels provides better elevated temperature corrosion resistance than the prior art type 316Ti alloys and, therefore, would enjoy more generated application as an automotive exhaust component. However, certain alloys within the present invention provide this corrosion resistance at a lower cost than the UNS Designation N06625 alloys because, for example, the present invention is an Iron-base alloy, while the N06625 alloys are more expensive nickel-base superalloys.

The austenitic stainless steels of the present invention preferably contain greater than 2 weight percent of molybdenum. Another preferred embodiment of the present invention includes less than 4 weight percent molybdenum. This concentration of molybdenum provides improved corrosion resistance at a reasonable cost. Certain embodiments of alloys within the present invention may optionally contain additional alloying components, such as, for example, manganese, phosphorous, sulfur, and copper.

Electric heat element sheaths typically comprise a resistance conductor enclosed in a metal sheath. The resistance conductor may be supported within and electrically Insulated from the sheathing by a densely packed layer of refractory, heat-conducting material. The resistance conductor may generally be a helically wound wire member while the refractory heat-conducting material may be granular magnesium oxide.

Examples of alloys within the present invention follow.

### Example 1

Certain stainless steels were prepared to compare the effect of molybdenum content and evaluated for resistance to corrosion in high temperature, corrosive environments. Two heats were melted with a target composition including, by weight, 19 to 23%, chromium and 30 to 35% nickel. The first alloy had a target molybdenum concentration of 2%, and the second alloy had a target molybdenum concentration of 4%. The actual compositions of the heats are shown in Table 1 as Sample 1 and Sample 2. Sample 1 contained 1.81% molybdenum and Sample 2 contained 3.54% molybdenum. The alloy Samples 1 and 2 were prepared by a conventional method, specifically, by vacuum melting the alloy components in concentrations to approximate the target specification. The formed ingots were then ground and hot rolled at approximately 2000°F (1093°C) to about 0.25 cm (0.1 inches) thick by 17.8 cm (7 inches) wide. The resulting plate was grit blasted and descaled in an acid. The plate was then cold rolled to a thickness of 0.02 cm (0.008 inches) and annealed in Inert gas. The resulting plate was formed into both flat coupon and welded teardrop samples.

For comparison, additional commercially available alloys were obtained and formed Into flat coupon and welded teardrop samples. Sample 3 was melted to specifications of a commercially available AISI Type 332 (UNS Designation N08800) alloy. Type 332 is an austenitic stainless steel characterized by a composition similar to that of Samples 1 and 2, but includes no deliberately added molybdenum. Type 332 is, generally, a nickel and chromium stainless steel designed to resist oxidation and carburization at elevated temperatures. The analysis of the Type 332 sample tested is shown in Table 1. Type 332 typically is characterized as an alloy comprising approximately 32 weight percent nickel and approximately 20 weight percent chromium. Type 332 was chosen for comparison purposes to determine the improvement offered by the addition of molybdenum In Samples 1 and 2 to the corrosion resistance in hot salt corrosion testing.

Also tested for comparison purposes were samples of AISI Type 316TI (UNS Designation S31635) (Sample 4) and AL 625 (UNS Designation NO6625) (sample 5). These two alloys are currently employed in flexible connectors for automotive exhaust systems because they are formable and resist intermediate temperature oxidation, general corrosion, and chloride stress corrosion cracking, particularly in the presence of high levels of road contaminants such as deicing salts. The composition of Samples 4 and 5 are shown In Table 1. AISI Type 316TI is a low cost alloy presently used in low temperature automotive exhaust system flexible connector applications. AL 625, on the other hand, is a higher cost material which presently finds broad application, including use as automotive exhaust system flexible connectors subjected to temperatures in excess of 1500°F (816°C).

**Table 1: Chemical composition of test samples**

| | Sample 1 | Sample 2 | Sample 3 | Sample 4 | Sample 5 |
|---|---|---|---|---|---|
| | T332+2Mo | T332+4Mo | T332 | T316Ti | AL625 Alloy |
| C | 0.020 | 0.019 | 0.013 | 0.08 max. | 0.05 |
| N | -- | 0.0045 | -- | 0.10 max. | -- |
| Al | 0.34 | 0.30 | 0.55 | | 0.30 |
| Si | 0.37 | 0.40 | 0.41 | 0.75 max. | 0.25 |
| Ti | -- | 0.35 | 0.37 | 0.70 | 0.30 |
| Cr | 20.72 | 20.70 | 20.55 | 16-18 | 22.0 |
| Mn | 0.95 | 0.91 | 0.97 | 2 max. | 0.30 |
| Fe | Bal | Bal | Bal | Bal | 4.0 |
| Ni | 31.07 | 30.74 | 31.19 | 10-14 | Balance |
| Nb + Ta | -- | -- | -- | -- | 3.5 |
| Mo | 1.81 | 3.54 | 0.19 | 2-3 | 9.0 |

A test was devised to examine the elevated temperature corrosion and oxidation resistance of the above samples in the presence of deposited corrosive solids. Special corrosion tests have been developed to simulate these high temperature corrosive environments. Currently, most testing of alloy resistance to corrosion from salt at elevated temperatures can be categorized as a "cup" test or a "dip" test.

In the cup test a sample of alloy is placed in a cup, generally of Swift or Erichsen geometry. The cup is then filled with a known volume of aqueous test solution having known salt concentration. The water in the cup is evaporated in an oven, leaving a salt coating on the sample. The sample is then exposed to elevated temperature under either cyclic or isothermal conditions and the sample's resistance to salt corrosion is assessed. In the dip test a sample, either flat or in a U-bend configuration, is dipped in an aqueous solution having known salt concentration. The water is evaporated in an oven, leaving a coating of salt on the sample. The sample may then be assessed for resistance to salt corrosion.

There are, however, problems with both of the above tests to determine resistance to corrosion from salt. The results of the test may be inconsistent and not easily compared from test to test because the salt coating is not evenly distributed across the extent of the surface to be tested or consistent between samples. Using either the cup or dip tests, salt will generally be deposited most heavily in the areas which are last to dry. In order to impose a more uniform deposition of salt on the samples, a simple, salt application method was utilized by the present inventor. The method comprised spraying an aqueous salt solution on a flat sample. An even layer of salt may be deposited from an aerosol spray consisting essentially of sodium chloride dissolved In deionized water using this method. During deposition of the aerosol spray, the samples are heated to approximately 300°F (149°C) to ensure rapid, uniform evaporation of the water from the aqueous solution. The amount of salt deposited is monitored by weighing between sprays, and is reported as a surface concentration (mg salt/cm² surface area of sample). Calculations indicate that the salt deposition may be controlled by careful use of this method to approximately ±0.01 mg/cm². After spraying, the samples may be exposed to at least one 72-hour thermal cycle at an elevated temperature in a muffle furnace in still lab air or any other environmental conditions as desired. Preferably, a dedicated test furnace and labware should be used for this test in order to avoid cross-contamination from other test materials. After exposure, the samples and any collected non-adherent corrosion products are independently weighed. The results are reported as a specific weight change relative to the original (uncoated) specimen weight as previously described.

Flat coupons were initially tested since this is the simplest method to screen alloys for susceptibility to hot salt corrosion. The weight of each sample was determined before testing. An even layer of salt was applied to 2.54 cm by 5.08 cm (1 inch by 2 inch) test samples of each test alloy. A dilute aqueous solution of chloride salts dissolved in deionized water was sprayed on each such sample. The samples were preheated to approximately 300°F (149°C) on a hot plate to ensure rapid, uniform evaporation of the water from the solution. The amount of salt deposited on each sample was monitored by weighing after each spraying. After spraying, the samples were placed in high form alumina crucibles and exposed in a muffle furnace to elevated temperatures to 1500°F (816°C). The typical exposure cycle was 72 hours at the elevated temperature in still lab air. After exposure the specimens were weighed. Any non-adherent corrosion products were collected and weighed separately. Any calculated weight gains or losses of the samples are due to the reaction of metal species with the atmosphere and any remaining salt from the coating. The amount of applied salt is generally much less than the weight change due to interaction with the environment, and as such can generally be discounted.

The effects of residual stresses resulting from forming or welding were also investigated. For this test, samples were formed into welded "teardrop" samples. The "teardrop" samples were fabricated by bending 0.16 cm (0.062") thick flat samples into a teardrop shape on a jig and then autogenously welding the mating edges. Prior to exposure to the elevated temperatures, the samples were coated with chloride salts using a method similar to that described for coating the flat samples. The coatings on the teardrops were not applied in a quantitative manner. However, the result of coating was an even, uniform deposition of salt. It is estimated that the amount of salt deposited on the outer surface of the teardrop samples was approximately 0.05 to 0.10 mg/cm². The coated specimens were exposed in the automated thermogravimetric cyclic oxidation laboratory setup. Every 24 hours the salt coating on each sample was removed by evaporation and the samples were then weighed so as to determine weight loss or gain caused by exposure to the environment. After weighing, the salt coatings were reapplied and the test was continued.
Table 2 summarizes the tests carried out on each of Samples 1 through 5.

**Table 2: Test specimen stock identification matrix**

| | Grade | Coupon testing | Teardrop testing |
|---|---|---|---|
| Sample 1 | T332 + 2Mo | - | - |
| Sample 2 | T332 + 4Mo | 0.02 cm (0.008") thick | 0.155 cm (0.061") thick |
| Sample 3 | T-332 | 0.02 cm (0.008") thick | 0.107 cm (0.058") thick |
| Sample 4 | T-316Ti | 0.02 cm (0.008") thick | 0.157 cm (0.062") thick |
| Sample 5 | AL625 | 0.02 cm (0.008") thick | 0.150 cm (0.059") thick |

### Results From Corrosion Testing (Example 1)

Flat coupon testing was used to provide an initial measure of performance and then welded teardrop tests were tested to confirm flat coupon testing and expand the test results.

### Flat Coupon Testing Results

Testing was conducted of flat coupon samples of four test materials, samples 2 through 5 listed in Table 1, to determine the affect of increased salt concentrations and increased temperatures on the corrosion resistance of the alloy. Coupons of each composition for samples 2 through 5 listed in Table 1 were tested with no added salt coating and salt coatings of 0.05 mg/cm² and 0.10mg/cm². The coupons were tested at two temperatures, 1200°F (649°C) and 1500°F (816°C). The samples were weighed prior to being coated with salt to determine their initial weight and then coated with the appropriate amount of salt for each test and placed In a 1200°F (649°C) environment to determine the resistance of each alloy to hot salt oxidation corrosion. After 72 hours of exposure to the elevated temperature, the samples were removed from the oven and allowed to cool to room temperature. The salt remaining on the sample was removed and the sample was weighed to determine the final weight of the sample.

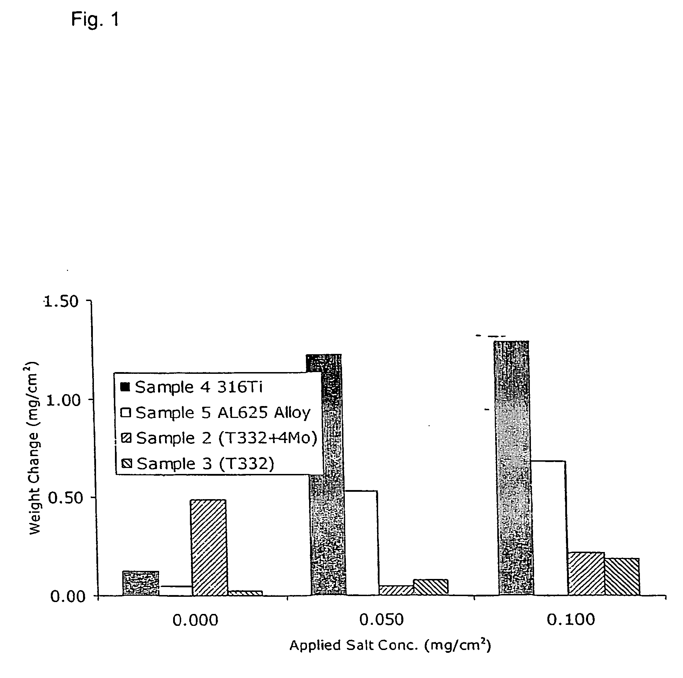

The results of the flat coupon sample hot oxidation corrosion test are shown In Figure 1. Figure 1 is a graph of weight change data comparing the results of hot salt corrosion testing of flat coupon samples of an alloy (Sample 2) and prior art alloys coated with a 0.0, 0.5 and 0.10 mg/cm² salt layer and exposed for 72 hours to 1200°F (649°C). The change in weight was determined by subtracting the initial weight of the sample by the final weight of the sample and, then, dividing this result by the initial surface area of the flat coupon sample.

All alloys performed well In this test at 1200°F (649°C). Each sample of each alloy showed a slight weight gain indicating the formation of an adherent oxidation layer. The formation of this metal oxide layer protects the body of the material if it remains adherent to the surface of the metal. Generally, the samples showed a greater weight gain with an increase in level of salt coating. This result indicates increased levels of oxidation on the surface of the sample with increased salt concentrations. T316Tj, Sample 4, showed the greatest weight gain of over 1 mg/cm² while the tested alloy Sample 2, and the T332, Sample 3, showed the least weight gain of less than 0.5 mg/cm².

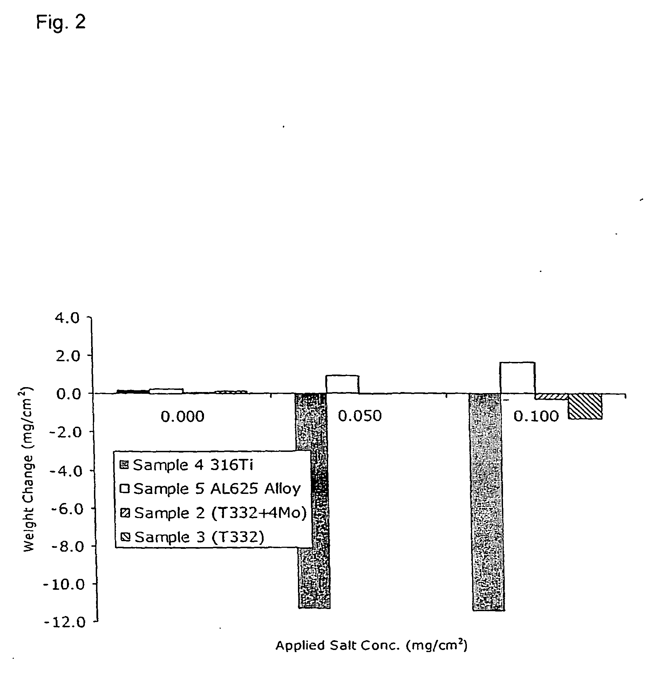

A similar test was conducted on the same samples at 1500°F (816°C) and the results are shown in Figure 2. The low temperature application alloy T-316TI performed poorly, as expected. Heavy spalling was noted and the coupons coated with 0.05 and 0.10 mg/cm² lost over 10 mg per square centimeter of initial surface area. This test confirmed that T-316Ti is unsuitable for use in elevated temperature applications, above 1200°F (649°C), and confirmed the reliability of the test method developed for comparing resistance of the alloys to hot salt oxidation. All other tested alloys performed well. T-332, Sample 3, showed weight loss of about 1,3 mg/cm² under the test conditions. The higher cost AL625 superalloy, Sample 5, exhibited a weight gain of approximately 1.7 mg/cm² under these test conditions. This weight gain is consistent with the formation of the protective layer of metal oxides on the surface of the alloy and minimal spalling of this protective layer. The alloy of Sample 2, exhibited almost no weight change under the test conditions. The presence of about 4 weight percent molybdenum in Sample 2 increased the hot salt corrosion resistance of the alloy relative to the prior art T-332 alloy, Sample 3. Sample 3 showed almost no weight change for the sample without a salt coating or with a coating of 0.05 mg/cm². However, when exposed to a salt concentration of 0.10 mg/cm², Sample 3 showed a degradation of the protective oxidation layer and a weight loss of greater than 1.5 mg/cm².

The alloy of Sample 2 displayed a strong resistance to hot salt oxidation corrosion in this testing. The molybdenum concentration in Sample 2 increased the corrosion resistance of the alloy over the corrosion resistance of the T332 alloy, Sample 3.

### Welded Tear Drop Testing Results

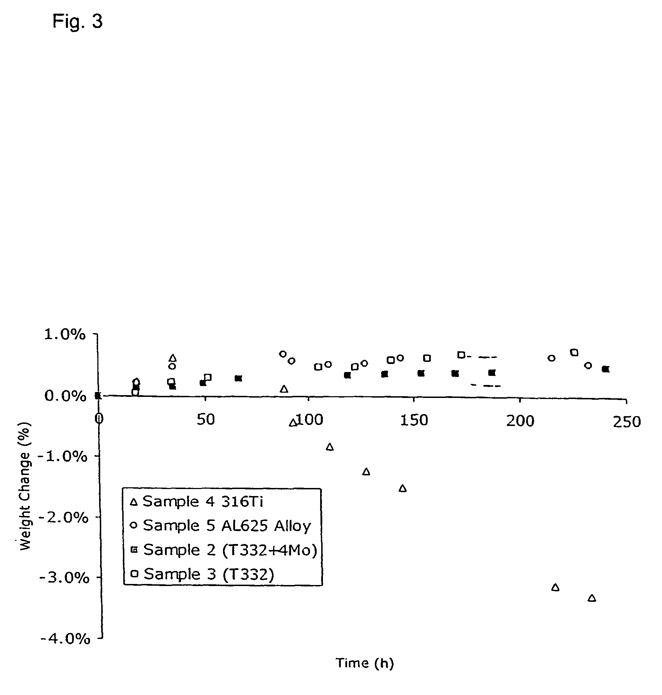

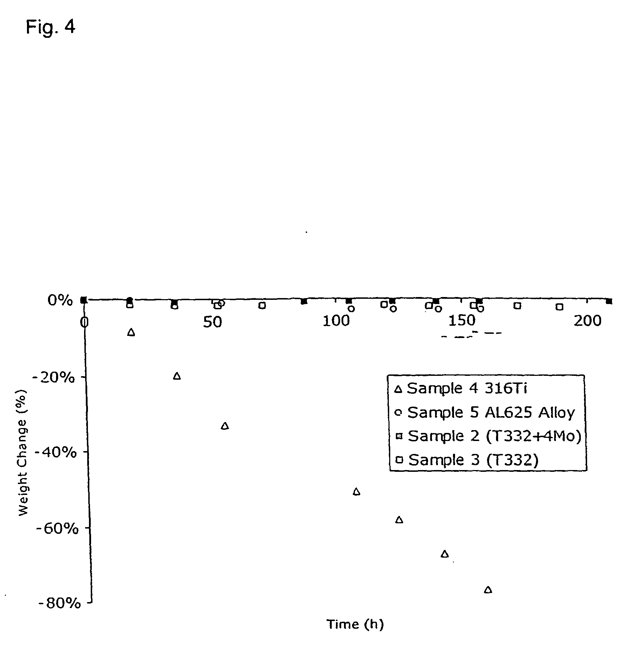

Welded tear drop testing was consistent with the flat coupon testing. The results of the welded teardrop testing are reported in percentage of weight change. The coupons were weighed initially and periodically throughout the extended period of testing, over 200 hours. Figures 3 and 4 are graphs of the weight change data comparing the results of hot salt corrosion testing of welded teardrop samples of an alloy of increased Mo content (Sample 2) and prior art alloys coated with a nominal 0.10 mg/cm² salt layer and exposed to 1200°F (649°C) and 1500°F (816°C), respectively. On both figures, it can be easily recognized that T316TI again performed very poorly and proved to be an unacceptable alloy for elevated temperature corrosive environments. All other tested samples were substantially equivalent in performance as shown In both Figures 3 and 4. The tested alloy, Sample 2, displayed the greatest resistance to corrosion under these conditions with less than 1% weight loss and no additional weight change after approximately the first 30 hours of the test. This compares favorably with the performance of the higher performance prior art alloy AL625, Sample 5, which lost approximately 3% of its initial weight over the length of testing at 1500°F (816°C). The tested alloy of Sample 2 better resisted hot salt oxidation compared with the other tested alloys.

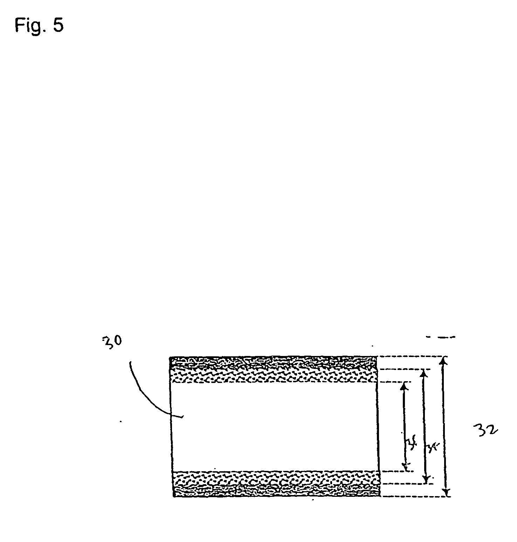

Weight change information alone is generally an incomplete parameter for measuring the total effect of degradation in a highly aggressive environment. Attack In highly aggressive environments, such as in hot salt oxidation corrosion, is often irregular in nature and can compromise a significantly larger portion of the cross-section of an alloy component than would appear to be affected from analysis of weight change data alone. Therefore, metal loss (in terms of percentage of remaining cross-section) was measured in accordance with ASTM-G54 Standard Practice for Simple Static Oxidation Testing. Figure 5 illustrates the definitions of the parameters derived from this analysis. Test Sample 30 has an initial thickness, Tₒ, shown as distance 32 in Figure 5. The percentage of metal remaining is determined by dividing the thickness of the test sample after exposure to the corrosion testing, Tₘ₁, shown as distance 34, by the initial thickness, 32. The percentage of unaffected metal is determined by dividing the thickness of the test sample showing no signs of corrosion, Tₘ, shown as distance 36 in Figure 4, by the initial thickness, 32. These results give a better indication than simple weight loss measurements as to when corrosion will totally degrade the metal coupon.

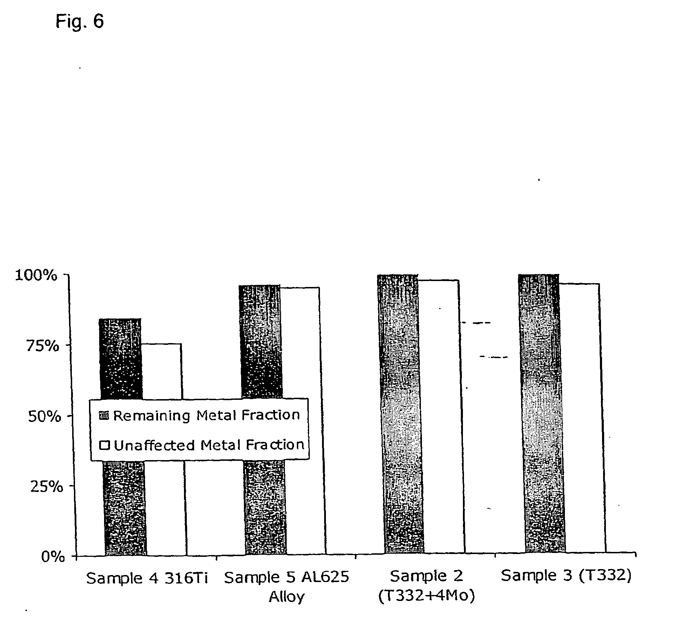

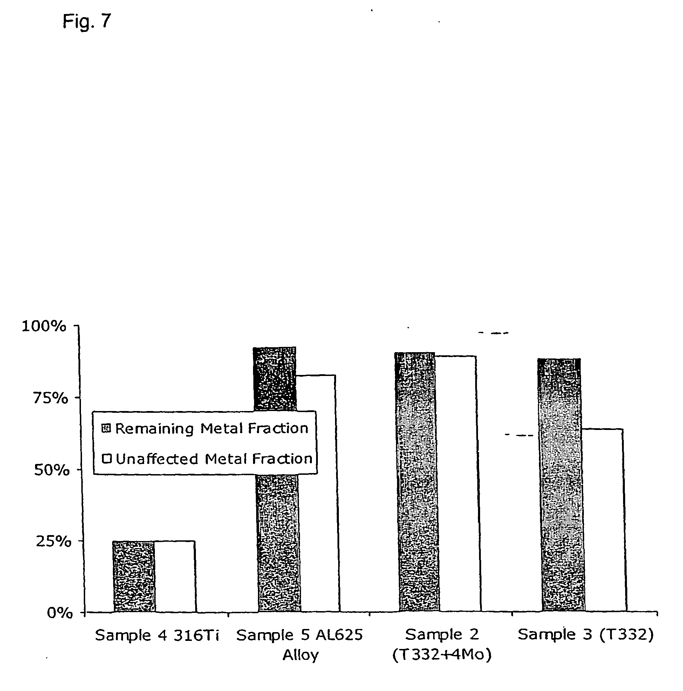

The results of the metallographic investigation are shown in Figures 6 and 7. Analysis of the low temperature alloy, T-316TI (Sample 4), displayed significant corrosion under the both test conditions, 1200°F (649°C) and 1500°F (816°C). Only 25% of the initial cross-section remained In the T316Ti coupon after testing at 1500°F (816°C).

The other tested alloys performed well at 1200°F (649°C), greater than 90% of the initial material remained unaffected for Samples 2, 3 and 5. The results of analysis of the coupons after exposure to 1500°F (816°C) indicated that the higher cost nickel-base AL625 superalloy Sample 5, experienced low percentage loss of Initial thickness but began to exhibit the formation of pitting, as indicated by the difference between the percentage of remaining cross-sectional area, approximately 93%, and the percentage of unaffected metal, approximately 82%. Localized pitting of the material as indicated by the results of analysis according to ASTM-G54 procedures provides data indicating the potential for localized failure of the material. The coupon comprised of T332 alloy also showed slight pitting after exposure to 1500°F (816°C) with less than 75% of the initial material remained unaffected.

The alloy of Sample 2, showed the greatest percentage of unaffected area remaining after testing at both temperatures. This result indicates that the molybdenum retards the degradation and.separation of the protective oxidation layer. The remaining cross-section and the percentage of unaffected area remaining after testing are approximately equal, about 90%. This indicates that hot salt corrosion of the alloys of the present invention is uniform across the surface of the test coupon and that premature failure should not occur due to localized failure. Conversely, this type of localized corrosion was exhibited by the prior art T-332 alloy, Sample 3. The analysis of Sample 3 Indicated slight pitting, a potential for localized failure.

### Example 2

Austenitic stainless steels can be subject to sensitization when exposed to high temperatures. As is known in the art, sensitization is the intergranular precipitation of chromium carbides in austenitic stainless steel when the steel is exposed to temperatures in the approximate range of 800-1500°F (427-816°C). A result of sensitization is that regions of the affected grains are depleted in chromium content, promoting susceptibility to intergranular corrosion in the presence of aqueous chlorides. In order to Investigate the susceptibility to sensitization, of alloys within the present invention, the present inventor prepared and tested five 22.7 kg (50 lb) VIM heats having the chemical compositions shown in Table 3. Table 3 identifies the heats as Heats 6-10 so as to distinguish them from Samples 1-5 In above Example 1. The heats included varying additions of the carbide-forming elements titanium and niobium. Heat 6 was formulated with an aim of zero titanium and zero niobium, and was found to include residuals levels of 0.002% titanium and 0.003% niobium. Heat 7 was formulated as a titanium-stabilized heat with an aim of 0.3% titanium and zero niobium, and was found to include 0.320% titanium and 0.003% niobium. Thus, Heat 7 represented an alloy similar in composition to Sample 2 in Example 1 above. Heats 8-10 were formulated to include varying levels of addition of niobium and an aim of zero titanium, and were found to include 0.24-0.46% niobium and a residuals level of 0.002% titanium. Accordingly, the susceptibility to sensitization of Heat 6, which was substantially free of both titanium and niobium, and Heat 7, which was titanium-stabilized and substantially free of niobium, were compared with that of Heats 8-10, which included significant niobium and were substantially free of titanium.

**Table 3: Chemical composition of test samples**

| | Heat 6 | Heat 7 | Heat 8 | Heat 9 | Heat 10 |
|---|---|---|---|---|---|
| C | 0.020 | 0.04 | 0.02 | 0.02 | 0.03 |
| Mn | 1.01 | 1.00 | 1.01 | 1.01 | 1.00 |
| P | 0.002 | 0.002 | 0.002 | 0.002 | 0.002 |
| Si | 0.41 | 0.41 | 0.40 | 0.40 | 0.53 |
| Cr | 21.74. | 21.62 | 21.66 | 21.64 | 21.43 |
| Ni | 33.43 | 33.83 | 33.43 | 33.4 | 33.42 |
| Al | 0.28 | 0.32 | 0.32 | 0.32 | 0.24 |
| Mo | 2.40 | 2.39 | 2.39 | 2.39 | 2.39 |
| Cu | 0.010 | 0.010 | 0.010 | 0.010 | 0.010 |
| Ti | 0.002 | 0.320 | 0.002 | 0.002 | 0.002 |
| N | 0.016 | 0.020 | 0.020 | 0.021 | 0.026 |
| Nb | 0.003 | 0.003 | 0.24 | 0.36 | 0.46 |

Each of the five heats was rolled to 0.19 cm (0.075 inch) thickness and solution annealed at 2050°F (1121°C) for 2 minutes time-at-temperature. Samples were sheared from each of the annealed finished panels and tested for sensitization according to the ASTM A262 (Practice A) test procedure, as revised in 2002. As is known in the art, the ASTM A262 (Practice A) test procedure involves deliberately exposing samples to a sensitizing heat treatment (1 hour at a 1200°F (649°C) furnace temperature), and then mounting, polishing and etching the samples to reveal the microstructure of each sample. The samples are then compared to reference micrographs, and each sample's revealed microstructure is classified as being in one of the following three categories:
"Step" - grain boundaries are revealed, normal structure
"Ditch" - grain boundaries are heavily etched, revealing sensitization
"Mixed - some amount of both step and ditch structures present

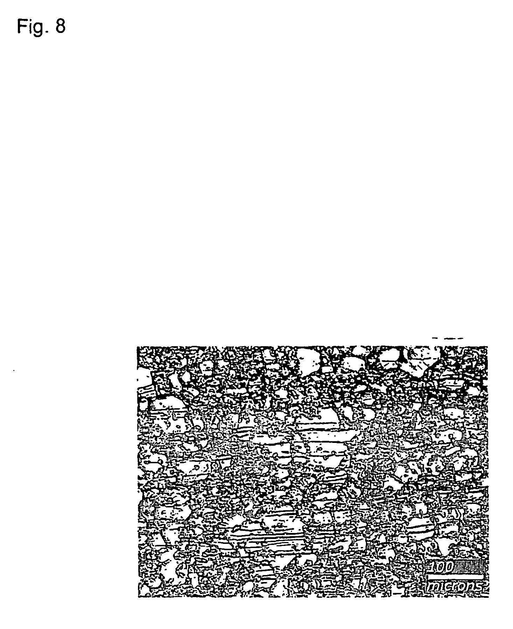

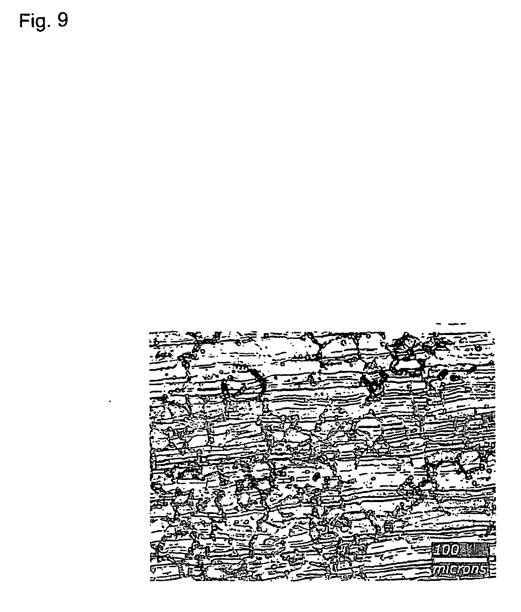

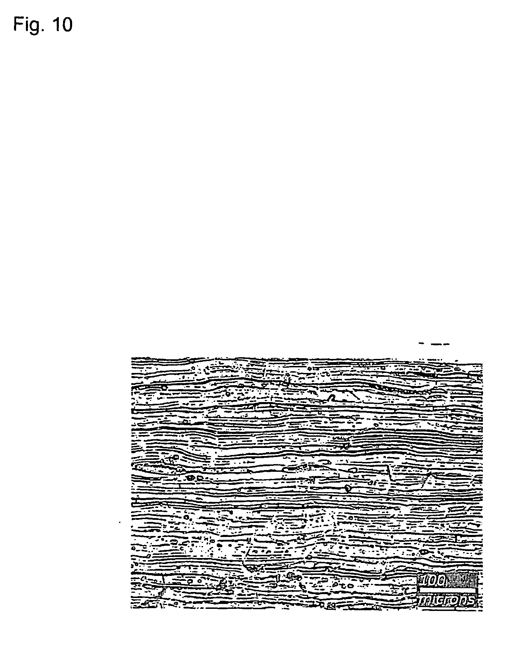

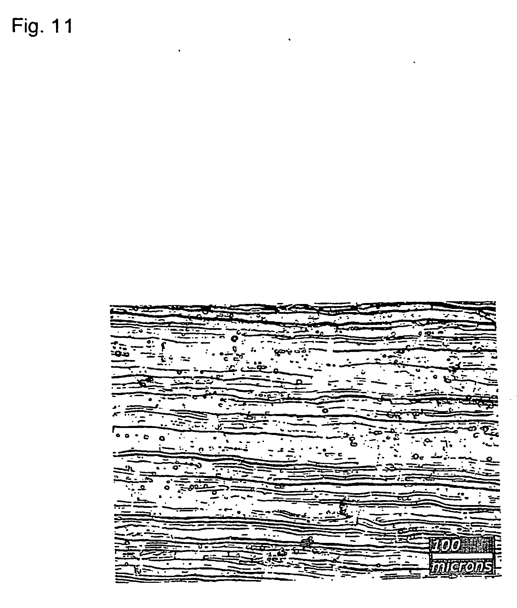

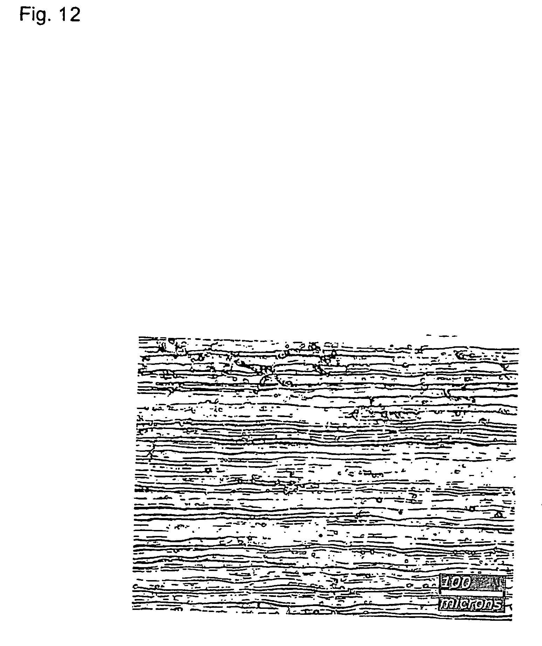

The results of the sensitization tests are .provided In Table 4. Representative micrographs of the observed microstructures of the samples from Heat 6 and Heat 7 are shown in Figures 8 and 9, respectively. Figures 11-12, respectively, are representative micrographs of the observed structures of the samples from Heats 8 (lowest level of intentional niobium addition), 9, and 10 (highest level of intentional niobium addition. The micrographs of Figures 10-12 appear essentially the same despite significant variation in the niobium content.

**Table 4: Sensitization test results**

| | Heat 6 | Heat 7 | Heat 8 | Heat 9 | Heat 10 |
|---|---|---|---|---|---|
| Observed Structure | Ditch | Mixed, biased to ditch | Step | Step | Step |

It is apparent from the results in Table 4 that the addition of niobium in Heats 8-10 substantially inhibited sensitization as measured by ASTM A262, Practice A, even though those heats included only very low levels of titanium. Moreover, all niobium levels in Heats 8-10 exhibited, a step structure, indicating no significant level of sensitization. In contrast, sensitization occurred in the material of Heat 6, which substantially lacked both titanium and niobium. Although Heat 7 included titanium in an amount similar to the 0.34% level in Sample 2 of Example 1 above, Heat 7 exhibited a microstructure biased to a ditch structure and, thus, had an observable level of sensitization. The Heat 7 sample exhibited more ditching of grain boundaries than not, indicating severe but not total sensitization. Thus, an unexpected and surprising result of the tests is that by modifying the composition of Heat 7 to substitute an addition of niobium for all or substantially all of the titanium in Heat 7, the resulting alloys, embodied in Heats 8-10, were not subject to sensitization at a level observable in the tests.

Accordingly, It was determined that niobium more effectively prevents sensitization than titanium in austenitic stainless steels of the type tested. The addition of too high a level of niobium may result in over-stabilized material, wherein the excess stabilizing element produces inclusions that may detrimentally affect, for example, corrosion, mechanical properties, fatigue life, surface finish, and formability. On the other hand, the addition of too little niobium may produce an under-stabilized material. It is believed that providing at least 0.24% and up to 0.6% niobium in, for example, an alloy having the general composition of Sample 2 in Example 1, will significantly reduce sensitization without significantly impairing other important properties of the alloy. Although it does not appear necessary to include titanium in the alloys, it is believed that alloys of the present invention including 0.25-0.6% niobium can tolerate the presence of titanium up to 0.03% and exhibit improved sensitization properties, it also appears from the sensitization test results that a carbon-to-niobium ratio of about 1:10 provides sufficient stabilization to significantly inhibit sensitization.

The improved sensitization performance of Heats 8-10 should manifest itself in the form of improved corrosion resistance at high temperatures in the presence of aqueous chlorides. An additional advantage of substituting niobium for some or all titanium is that there may be no need for a stabilizing anneal (an intermediate temperature heat treatment designed to pre-form stabilizing carbides), thereby allowing standard solution or mill-annealed material to be used without the danger of sensitization during service.

Considering the above observations in Example 2, one aspect of the present invention is directed to an article for manufacture including an austenitic stainless steel comprising, by weight, 19% to 23% chromium, 30% to 35% nickel, 1% to 6% molybdenum, 0 to 0.03% titanium, 0.15% to 0.6% aluminum, up to 0.1% carbon, 1% to 1.5% manganese, 0 to less than 0.8% silicon, 0.24% to 0.6% niobium, and iron the ratio of niobium to carbon being selected to be at least 10:1. For ease of reference only, such alloy is referred to hereinafter as the "niobium-containing stainless steel of the present invention" or, more simply, as the 'niobium-containing stainless steel".

In certain embodiments, the niobium-containing stainless steel of the present invention includes 0.3% to 0.5% niobium. It is believed that a niobium content within this range provides a further cushion against the possibility of under-and over-stabilization, while still providing improved sensitization properties.

At least 19% chromium is present in the niobium-containing stainless steel to provide a basic level of corrosion and high temperature oxidation resistance. If chromium is present at too high a level, then it can be difficult to adjust carbon to desired levels, the tendency for second phase formation increases, and the cost and difficulty of making the alloy increases. Accordingly, in certain forms, the niobium-containing stainless steel of the present invention includes 19% to 21.5% chromium, and may include about 21 % chromium.

Increasing molybdenum content enhances resistance to corrosion and, in particular, localized corrosion such as pitting and crevice corrosion. The addition of molybdenum is generally more effective at improving pitting/crevice corrosion than the addition of chromium. Adding too high a level of molybdenum, however, results in sigma phase formation at temperatures greater than about 1000°F (538°C). Sigma phase reduces corrosion resistance and can make the alloy brittle at room temperature. In addition, molybdenum is relatively expensive. Thus, in general, the level of molybdenum should be minimized while still providing the desired level of corrosion resistance. Accordingly, certain embodiments of the niobium-containing stainless steel of the present invention may include 2% to 4% molybdenum, while other embodiments include 1% to 2.7% molybdenum. In one form, the stainless steel includes about 2.5% molybdenum.

When present at high levels, titanium causes surface defects. Titanium also forms inclusions in the presence of carbon and nitrogen, which adversely affects formability and fatigue resistance. Accordingly, in certain embodiments, the titanium content of the niobium-containing stainless steel of the present invention is restricted to the range of 0 to 0.01%, while in other embodiments is restricted to 0 to 0.005%.

Carbon content dictates the amount of carbides that will form when carbon solubility is exceeded. The addition of carbon beyond the solubility limit is generally accompanied by increasing levels of stabilizing elements, such as titanium and niobium, so as to form an excess of carbides, which enhance high temperature creep strength. Such higher carbon additions, however, can adversely affect the ability to roll to thin gauge, harm formability, and reduce fatigue strength. Accordingly, certain embodiments of the niobium-containing stainless steel include no more than 0.03% carbon. Other embodiments include no more than 0.025% carbon. Certain embodiments of the niobium-containing stainless steel also may include one or both of 0.15% to 0.4% aluminum, and up to 0.4% silicon. In certain forms, the niobium-containing stainless steel includes one or more of about 0.30% aluminum, about 0.020% carbon, and about 0.30% silicon.

Copper increases resistance to certain types of corrosion, such as corrosion in reducing environments like dilute sulfuric acid. High copper levels, however, can result in formation of undesirable second phases. Accordingly, the niobium-containing stainless steel may include up to 0.75% copper, while certain embodiments of the steel may include up to 0.4% copper. In one form, the niobium-containing stainless steel includes about 0.3% copper.

Sulfur content preferably is minimized to avoid adversely affecting hot workability. Phosphorus is an impurity that can adversely affect properties at too high a level. Accordingly, in certain forms, the niobium-containing stainless steel is limited to no greater than 0.05% phosphorus and/or no greater than 0.02% sulfur.

Nitrogen generally increases strength, austenite stability (for example, resistance to sigma formation) and corrosion resistance. Too high a level of nitrogen, however, may tie up niobium and reduce resistance to sensitization, and also may form inclusions. Accordingly, in certain embodiments, the niobium-containing stainless steel includes no more than 0.1 % nitrogen, in certain other embodiments includes no more than 0.025% nitrogen, and in one form includes about 0.020% nitrogen.

Considering advantages that may be derived from certain of the foregoing modifications to the broad composition for the niobium-containing stainless steel, an additional aspect of the present invention is directed to an article for manufacture including an austenitic stainless steel comprising, by weight, 19% to 21.5% chromium, 30% to 35% nickel, 1% to 2.7% molybdenum, 0 to 0.03% titanium, 0.15% to 0.4% aluminum, up to 0.025% carbon, 1% to 1.5% manganese, 0 to less than 0.8% silicon, 0 to 0,75% copper, 0.24% to 0.6% niobium, and iron. In one form the nioblum-containing stainless steel includes, by weight, 21.5% chromium, 34.5% nickel, 2.5% molybdenum, 0.02% carbon, 1.2% manganese, no greater than 0.03% titanium, 0.5% niobium, up to 0.05% phosphorus, up to 0.02% sulfur, 0.30% silicon, 0.30% aluminum, 0.30% copper, 0.020% nitrogen, iron and incidental impurities.

Again taking into consideration the results of Example 2, a further aspect of the present invention is directed to an article for manufacture including an austenitic stainless steel including molybdenum and niobium and consisting essentially of, by weight, 19% to 23% chromium, 30% to 35% nickel, 1% to 6% molybdenum, 0 to 0.03% titanium, 0.15% to 0.6% aluminum, up to 0.1 % carbon. 1% to 1.5% manganese, 0 to less than 0.8% silicon, 0.24% to 0.6% niobium, 0 to 0.75% copper, up to 0.05% phosphorus, up to 0.02% sulfur, up to 0.1% nitrogen, iron and incidental impurities. Incidental Impurities may include, for example, residual levels of impurities derived from scrap and other materials from which the alloys are produced. Given the above possible modifications to the composition of the niobium-containing stainless steel, another form of the present Invention is directed to an article for manufacture including an austenitic stainless steel including molybdenum and niobium and consisting essentially of, by weight, 19% to 21.5% chromium, 30 to 35% nickel, 1% to 2.7% molybdenum, 0 up to 0.03% titanium, 0.15% to 0.4% aluminum, up to 0.025% carbon, 1% to 1.5% manganese, 0 to less than 0.8% silicon, 0.24% to 0.6% niobium, up to 0.05% phosphorus, up to 0.02% sulfur, up to 0.1% nitrogen, iron and incidental impurities:

It will be understood that the present invention encompasses articles of manufacture made wholly or partially from austenitic stainless steels as set forth in the present disclosure, and further encompasses methods of making such articles. Without intending to limit the possible embodiments of such articles of manufacture, examples of articles that may include the austenitic stainless steel described herein and that may be made by such methods include automobiles, automotive exhaust system components (such as , for example, automotive exhaust system flexible connectors), heating element sheaths, and gaskets. Those having ordinary skill may readily design a suitable process for producing such articles of manufacture using the stainless steels of the present invention.

Given the corrosion resistance properties of the austenitic stainless steels described In this Example 2, it is believed that the steels would be particularly well suited for application as automotive exhaust system flexible connectors. Material with a relatively fine grain size is required when fabricating automotive exhaust flexible connectors and other light gauge articles. Material having to coarse a grain size would not form well in the hydroforming process typically used to fabricate automotive exhaust system flexible connectors. Accordingly, nioblum-containing stainless steel of the present invention having an ASTM grain size number of 7 or higher (for example, 8-10) would be used to form such flexible connectors.

When producing automotive exhaust system flexible connectors from the niobium-containing stainless steel, the steel may be made by electric furnace/AQD melting, casting, hot rolling, and then multi-stage rolling on a duster mill to light gauge. The light gauge material may be bright annealed and slit to a relatively narrow strip having a thickness of, for example 0.015-0.025 cm (0.006-0.010 inch) The continuous coil of material is welded into a tube on an automated tube mill, and then hydroformed into a corrugated flexible connector bellows. This requires that the material have a consistent edge, a relatively clean and stabilized microstructure free of gross defects, a surface free of scale, and high intrinsic ductility and fracture toughness. Those having ordinary skill will be familiar with suitable methods of processing material for use as automotive exhaust system flexible connectors. Accordingly, further description of such methods is considered unnecessary.

## Claims

1. An article of manufacture including an austenitic stainless steel comprising, by weight:
19% to 23% chromium;
30% to 35% nickel;
1% to 6% molybdenum;
0 to 0.03% titanium;
0.15% to 0.6% aluminium;
up to 0.1 % carbon;
1% to 1.5% manganese;
0 to less than 0.8% silicon;
0.24% to 0.6% niobium;
optionally 0 to 0.75% copper;
optionally no greater than 0.05% phosphorus;
optionally no greater than 0.02% sulphur;
optionally no greater than 0.1% nitrogen; and
iron and incidental impurities, the ratio of niobium to carbon being selected to be at least 10:1,
wherein the article of manufacture is selected from the group consisting of an automobile, an automotive exhaust system component, an automotive exhaust system flexible connector, a heating element sheath, and a gasket.

2. The article of manufacture of claim 1 **characterised in that** the austenitic stainless steel comprises 19% to 21.5% chromium.

3. The article of manufacture of claim 1 or claim 2 **characterised in that** the austenitic stainless steel comprises 2% to 4% molybdenum.

4. The article of manufacture of claim 1 or claim 2 **characterised in that** the austenitic stainless steel comprises 1% to 2.7% molybdenum.

5. The article of manufacture of any one of the preceding claims **characterised in that** the austenitic stainless steel comprises 0 to 0.01% titanium.

6. The article of manufacture of claim 5 **characterised in that** the austenitic stainless steel comprises 0 to 0.005% titanium.

7. The article of manufacture of any one of the preceding claims **characterised in that** the austenitic stainless steel comprises 0.15% to 0.4% aluminium.

8. The article of manufacture of any one of the preceding claims **characterised in that** the austenitic stainless steel comprises up to 0.025% carbon.

9. The article of manufacture of any one of the preceding claims **characterised in that** the austenitic stainless steel comprises 0 to 0.4% silicon.

10. The article of manufacture of any one of the preceding claims **characterised in that** the austenitic stainless steel comprises 0.3% to 0.5% niobium.

11. The article of manufacture of any one of the preceding claims **characterised in that** the austenitic stainless steel comprises 0 to 0.4% copper.

12. The article of manufacture of claim 1 **characterised in that** the austenitic stainless steel comprises, by weight:
19% to 21.5% chromium;
30% to 35% nickel;
1% to 2.7% molybdenum;
0 to 0.03% titanium;
0.15% to 0.4% aluminium;
up to 0.025% carbon;
1 % to 1.5% manganese;
0 to less than 0.8% silicon;
0.24% to 0.6% niobium; and
iron and incidental impurities, the ratio of niobium to carbon being selected to be at least 10:1.

13. The article of manufacture of claim 1 **characterised in that** the austenitic stainless steel consists of, by weight:
19% to 23% chromium;
30% to 35% nickel;
1% to 6% molybdenum;
0 to 0.03% titanium;
0.15% to 0.6% aluminium;
up to 0.1 % carbon;
1% to 1.5% manganese;
0 to less than 0.8% silicon;
0.24% to 0.6% niobium;
0 to 0.75% copper;
up to 0.05% phosphorus;
up to 0.02% sulphur;
up to 0.1 % nitrogen;
iron; and
incidental impurities, the ratio of niobium to carbon being selected to be at least 10:1.

14. An article of manufacture in accordance with of any one of the preceding claims **characterised in that** the article of manufacture is an automotive exhaust system flexible connector.

15. A method of making an article of manufacture in accordance with any one of claims 1 to 13, wherein the article of manufacture is selected from the group consisting of an automobile, an automotive exhaust system component, an automotive exhaust system flexible connector, a heating element sheath, and a gasket, the method comprising:
forming at least a portion of the article of manufacture from the austenitic stainless steel.

## Patentansprüche

1. Fertigungsgegenstand, einschließend einen Austenitedelstahl, umfassend auf das Gewicht bezogen:
19 % bis 23 % Chrom;
30 % bis 35 % Nickel;
1 % bis 6 % Molybdän;
0 bis 0,03 % Titan;
0,15 % bis 0,6 % Aluminium;
bis zu 0,1 % Kohlenstoff;
1 % bis 1,5 % Mangan;
0 bis weniger als 0,8 % Silicium;
0,24 % bis 0,6 % Niob;
wahlweise 0 bis 0,75 % Kupfer;
wahlweise nicht mehr als 0,05 % Phosphor;
wahlweise nicht mehr als 0,02 % Schwefel;
wahlweise nicht mehr als 0,1 % Stickstoff; und
Eisen und Nebenverunreinigungen, wobei das Verhältnis von Niob zu Kohlenstoff derart ausgewählt ist, dass es mindestens 10:1 beträgt,
wobei der Fertigungsgegenstand ausgewählt ist aus der Gruppe, bestehend aus einem Kraftfahrzeug, einer Komponente eines Kraftfahrzeugabgassystems, einem flexiblen Anschlussteil für ein Kraftfahrzeugabgassystem, einer Heizelementummantelung und einer Dichtung.

2. Fertigungsgegenstand nach Anspruch 1, **dadurch gekennzeichnet, dass** der Austenitedelstahl 19 % bis 21,5 % Chrom umfasst.

3. Fertigungsgegenstand nach Anspruch 1 oder Anspruch 2, **dadurch gekennzeichnet, dass** der Austenitedelstahl 2 % bis 4 % Molybdän umfasst.

4. Fertigungsgegenstand nach Anspruch 1 oder Anspruch 2, **dadurch gekennzeichnet, dass** der Austenitedelstahl 1 % bis 2,7 % Molybdän umfasst.

5. Fertigungsgegenstand nach einem der vorangehenden Ansprüche, **dadurch gekennzeichnet, dass** der Austenitedelstahl 0 bis 0,01 % Titan umfasst.

6. Fertigungsgegenstand nach einem der vorangehenden Ansprüche, **dadurch gekennzeichnet, dass** der Austenitedelstahl 0 bis 0,005 % Titan umfasst.

7. Fertigungsgegenstand nach einem der vorangehenden Ansprüche, **dadurch gekennzeichnet, dass** der Austenitedelstahl 0,15 % bis 0,4 % Aluminium umfasst.

8. Fertigungsgegenstand nach einem der vorangehenden Ansprüche, **dadurch gekennzeichnet, dass** der Austenitedelstahl bis zu 0,025 % Kohlenstoff umfasst.

9. Fertigungsgegenstand nach einem der vorangehenden Ansprüche, **dadurch gekennzeichnet, dass** der Austenitedelstahl 0 bis 0,4 % Silicium umfasst.

10. Fertigungsgegenstand nach einem der vorangehenden Ansprüche, **dadurch gekennzeichnet, dass** der Austenitedelstahl 0,3 % bis 0,5 % Niob umfasst.

11. Fertigungsgegenstand nach einem der vorangehenden Ansprüche, **dadurch gekennzeichnet, dass** der Austenitedelstahl 0 bis 0,4 % Kupfer umfasst.

12. Fertigungsgegenstand nach Anspruch 1, **dadurch gekennzeichnet, dass** der Austenitedelstahl auf das Gewicht bezogen umfasst:
19 % bis 21,5 % Chrom;
30 % bis 35 % Nickel;
1 % bis 2,7 % Molybdän;
0 bis 0,03 % Titan;
0,15 % bis 0,4 % Aluminium;
bis zu 0,025 % Kohlenstoff;
1 % bis 1,5 % Mangan;
0 bis weniger als 0,8 % Silicium;
0,24 % bis 0,6 % Niob; und
Eisen und Nebenverunreinigungen, wobei das Verhältnis von Niob zu Kohlenstoff derart ausgewählt ist, dass es mindestens 10:1 beträgt.

13. Fertigungsgegenstand nach Anspruch 1, **dadurch gekennzeichnet, dass** der Austenitedelstahl auf das Gewicht bezogen umfasst:
19 % bis 23 % Chrom;
30 % bis 35 % Nickel;
1 % bis 6 % Molybdän;
0 bis 0,03 % Titan;
0,15 % bis 0,6 % Aluminium;
bis zu 0,1 % Kohlenstoff;
1 % bis 1,5 % Mangan;
0 bis weniger als 0,8 % Silicium;
0,24 % bis 0,6 % Niob;
wahlweise 0 bis 0,75 % Kupfer;
bis zu 0,05 % Phosphor;
bis zu 0,02 % Schwefel;
bis zu 0,1 % Stickstoff; und
Eisen
und Nebenverunreinigungen, wobei das Verhältnis von Niob zu Kohlenstoff derart ausgewählt ist, dass es mindestens 10:1 beträgt.

14. Fertigungsgegenstand nach einem der vorangehenden Ansprüche, **dadurch gekennzeichnet, dass** der Fertigungsgegenstand ein flexibles Anschlussteil für ein Kraftfahrzeugabgassystem ist.

15. Verfahren zur Herstellung eines Fertigungsgegenstands nach einem der Ansprüche 1 bis 13, wobei der Fertigungsgegenstand ausgewählt ist aus der Gruppe, bestehend aus einem Kraftfahrzeug, einer Komponente eines Kraftfahrzeugabgassystems, einem flexiblen Anschlussteil für ein Kraftfahrzeugabgassystem, einer Heizelementummantelung und einer Dichtung, wobei das Verfahren umfasst:
Formen zumindest eines Teils des Fertigungsgegenstands aus dem Austenitedelstahl.

## Revendications

1. Article de fabrication comprenant un acier inoxydable austénitique comprenant, en poids :
- 19% à 23% de chrome ;
- 30% à 35% de nickel ;
- 1% à 6% de molybdène ;
- 0 à 0,03% de titane ;
- 0,15% à 0,6% d'aluminium ;
- jusqu'à 0,1% de carbone ;
- 1% à 1,5% de manganèse ;
- 0 à moins de 0,8% de silicium ;
- 0,24% à 0,6% de niobium ;
- éventuellement 0 à 0,75% de cuivre ;
- éventuellement pas plus de 0,05% de phosphore ;
- éventuellement pas plus de 0,02% de soufre ;
- éventuellement pas plus de 0,1% d'azote ; et
- du fer et des impuretés accidentelles, le rapport du niobium au carbone étant choisi de manière à être d'au moins 10:1,
dans lequel l'article de fabrication est choisi dans le groupe constitué par une automobile, un composant de système d'échappement d'automobile, un connecteur flexible de système d'échappement d'automobile, une gaine d'élément chauffant et un joint.

2. Article de fabrication selon la revendication 1, **caractérisé en ce que** l'acier inoxydable austénitique comprend 19% à 21,5% de chrome.

3. Article de fabrication selon la revendication 1 ou la revendication 2, **caractérisé en ce que** l'acier inoxydable austénitique comprend 2% à 4% de molybdène.

4. Article de fabrication selon la revendication 1 ou la revendication 2, **caractérisé en ce que** l'acier inoxydable austénitique comprend 1% à 2,7% de molybdène.

5. Article de fabrication selon l'une quelconque des revendications précédentes, **caractérisé en ce que** l'acier inoxydable austénitique comprend 0 à 0,01% de titane.

6. Article de fabrication selon la revendication 5, **caractérisé en ce que** l'acier inoxydable austénitique comprend 0 à 0,005% de titane.

7. Article de fabrication selon l'une quelconque des revendications précédentes, **caractérisé en ce que** l'acier inoxydable austénitique comprend 0,15% à 0,4% d'aluminium.

8. Article de fabrication selon l'une quelconque des revendications précédentes, **caractérisé en ce que** l'acier inoxydable austénitique comprend jusqu'à 0,025% de carbone.

9. Article de fabrication selon l'une quelconque des revendications précédentes, **caractérisé en ce que** l'acier inoxydable austénitique comprend 0 à 0,4% de silicium.

10. Article de fabrication selon l'une quelconque des revendications précédentes, **caractérisé en ce que** l'acier inoxydable austénitique comprend 0,3% à 0,5% de niobium.

11. Article de fabrication selon l'une quelconque des revendications précédentes, **caractérisé en ce que** l'acier inoxydable austénitique comprend 0 à 0,4% de cuivre.

12. Article de fabrication selon la revendication 1, **caractérisé en ce que** l'acier inoxydable austénitique comprend, en poids :
- 19% à 21,5% de chrome ;
- 30% à 35% de nickel ;
- 1% à 2,7% de molybdène ;
- 0 à 0,03% de titane ;
- 0,15% à 0,4% d'aluminium ;
- jusqu'à 0,025% de carbone ;
- 1% à 1,5% de manganèse ;
- 0 à moins de 0,8% de silicium ;
- 0,24% à 0,6% de niobium ; et
- du fer et des impuretés accidentelles, le rapport du niobium au carbone étant choisi de manière à être d'au moins 10:1.

13. Article de fabrication selon la revendication 1, **caractérisé en ce que** l'acier inoxydable austénitique se compose de, en poids :
- 19% à 23% de chrome ;
- 30% à 35% de nickel ;
- 1% à 6% de molybdène ;
- 0 à 0,03% de titane ;
- 0,15% à 0,6% d'aluminium ;
- jusqu'à 0,1% de carbone ;
- 1% à 1,5% de manganèse ;
- 0 à moins de 0,8% de silicium ;
- 0,24% à 0,6% de niobium ;
- 0 à 0,75% de cuivre ;
- jusqu'à 0,05% de phosphore ;
- jusqu'à 0,02% de soufre ;
- jusqu'à 0,1% d'azote ; et
- de fer ; et
- d'impuretés accidentelles, le rapport du niobium au carbone étant choisi de manière à être d'au moins 10:1.

14. Article de fabrication selon l'une quelconque des revendications précédentes, **caractérisé en ce que** l'article de fabrication est un connecteur flexible de système d'échappement d'automobile.

15. Procédé de fabrication d'un article de fabrication selon l'une quelconque des revendications 1 à 13, dans lequel l'article de fabrication est choisi dans le groupe constitué par une automobile, un composant de système d'échappement d'automobile, un connecteur flexible de système d'échappement d'automobile, une gaine d'élément chauffant et un joint, le procédé comprenant :
- la formation d'au moins une partie de l'article de fabrication à partir de l'acier inoxydable austénitique.
